# EUROPÄISCHE PATENTSCHRIFT

(11) **EP 0 597 135 B1**
(45) Veröffentlichungstag und Bekanntmachung des Hinweises auf die Patenterteilung: **02.07.1997**
(21) Anmeldenummer: 92119018.7
(22) Anmeldetag: 06.11.1992
(51) Int. Cl.: G06K 13/02

(54) **Vorrichtung zum Lesen und Beschreiben von Magnetkarten**
Device for reading and writing on magnetic cards
Dispositif de lecture et d'écriture de cartes magnétiques

(43) Veröffentlichungstag der Anmeldung: 18.05.1994
(73) Patentinhaber: SCHEIDT & BACHMANN GMBH, D-41238 Mönchengladbach (DE)
(72) Erfinder: Miller, Gert, 41063 Mönchengladbach (DE); Crynen, Norbert, Dipl.-Ing., 41179 Mönchengladbach (DE)
(74) Vertreter: Stenger, Watzke & Ring Patentanwälte

(56) Entgegenhaltungen:
- EP-A- 0 251 833
- EP-A- 0 358 199
- PATENT ABSTRACTS OF JAPAN vol. 8, no. 26 (M-273)3. Februar 1984 & JP-A-58 183 557

## Beschreibung

Die Erfindung betrifft eine Vorrichtung zum Lesen und Beschreiben von Magnetkarten mit einer Codier- und Leseeinheit, einem Drucker und einer zylindrischen Aufnahmetrommel, die mit einem diametral durchgehenden Kartenschacht versehen und um eine quer zur Kartenlängsachse verlaufende Drehachse verdrehbar ist.

Derartige Vorrichtungen zum Lesen und Beschreiben von Magnetkarten sind beispielsweise aus der EP-A1-0 118 730 bekannt. Sie sind in der Lage, in jeder möglichen Lage und Orientierung in die Vorrichtung eingeführte Magnetkarten auszuwerten und weiter zu verarbeiten, wobei die korrekte Lage zum Lesen und Weiterverarbeiten der Magnetkarten durch entsprechendes Drehen der Aufnahmetrommel erreicht wird.

Der Erfindung liegt die Aufgabe zugrunde, eine derartige Vorrichtung derart weiter zu bilden, daß für die Weiterverarbeitung der in die Vorrichtung eingeführten Magnetkarte auch mindestens eine weitere, ebenfalls in die Vorrichtung einzuführende maschinenlesbare Karte, beispielsweise eine Wertkarte, eine Kreditkarte und/oder eine Kundenkarte herangezogen werden kann.

Die Lösung dieser Aufgabenstellung durch die Erfindung ist dadurch gekennzeichnet, daß der mindestens um 180° verdrehbaren Aufnahmetrommel mindestens zwei Parkschächte zugeordnet sind, von denen mindestens einer zur zeitweisen Aufnahme der zu verarbeitenden Magnetkarte und mindestens einer zur zeitweisen Aufnahme einer weiteren, für den Verarbeitungsvorgang benötigten Karte vorgesehen ist.

Durch die erfindungsgemäße Zuordnung mindestens zweier Parkschächte zu der verdrehbaren Aufnahmetrommel wird die Möglichkeit geschaffen, die beispielsweise zur Bezahlung einer Ware oder einer Dienstleistung in die Vorrichtung eingeführte Magnetkarte unter Verwendung einer weiteren maschinenlesbaren Karte zu verarbeiten, ohne daß es für diese weitere Karte einer separaten Vorrichtung mit eigener Eingabeöffnung bedarf. Sowohl die weiter zu verarbeitende Magnetkarte als auch mindestens eine weitere maschinenlesbare Karte können bei der erfindungsgemäßen Vorrichtung durch dieselbe Eingabeöffnung eingeführt werden. Sowohl die Magnetkarte als auch die weitere maschinenlesbare Karte werden jeweils in einem der Parkschächte aufgenommen, wenn die jeweils andere Karte gelesen, codiert oder umgeschrieben wird. Auf diese Weise ist es somit möglich, die Weiterverarbeitung einer Magnetkarte mit Hilfe mindestens einer weiteren maschinenlesbaren Karte in ein und derselben Vorrichtung vorzunehmen.

Gemäß einem weiteren Merkmal der Erfindung sind die Parkschächte unter einem Winkel zur Zuführrichtung der zu verarbeitenden Karten angeordnet und in Zuführrichtung ein Durchgangskanal angeordnet, durch den die Karten einer der Vorrichtung nachgeschalteten Weiterverarbeitung zugeführt werden können oder durch den der Vorrichtung für den Verarbeitungsvorgang benötigtes Material zugeführt werden kann, das eine den Durchmesser der Aufnahmetrommel übersteigende Länge hat, wie beispielsweise Bilanz- oder Diagnoseausdrucke. Die erfindungsgemäße Ausbildung eines in Zuführrichtung verlaufenden Durchgangskanals gestattet somit auch die Verarbeitung und Ausgabe von den Durchmesser der Aufnahmetrommel übersteigenden Materialien, wie beispielsweise Bilanz- oder Diagnoseausdrucke größerer Länge.

Mit der Erfindung wird weiterhin vorgeschlagen, der Aufnahmetrommel mindestens einen Zufuhrkanal für Kartenrohmaterial zuzuordnen. Hierbei kann es sich um Kartenrollen oder Kartenstapel, vorzugsweise gefaltete Kartenstapel handeln, aus denen Magnetkarten aus Papier, Karton sowie Dick- und Dünnplastik hergestellt werden können, die mittig und/oder seitlich mit Magnetstreifen versehen sind, aber auch kontaktbehaftete oder kontaktlose Chips enthalten können.

In an sich bekannter Weise kann der Aufnahmetrommel ein in einem Kartenauffangbehälter mündender Karteneinzugkanal zugeordnet sein, so daß einzuziehende Karten unmittelbar aus der erfindungsgemäßen Vorrichtung entfernt werden.

Der Aufnahmetrommel kann aber auch mindestens ein unter einem Winkel zur Zufuhrrichtung der zu verarbeitenden Karten ausgerichteter zusätzlicher Kartenausgabekanal zugeordnet sein. Ein derartiger zusätzlicher Kartenausgabekanal ist beispielsweise dann von Vorteil, wenn der Benutzer nach Eingabe seiner Magnetkarte beispielsweise eine mit Hilfe seiner eingegebenen Magnetkarte geöffnete Sperre passiert hat, so daß es zweckmäßig ist, die weiterverarbeitete Magnetkarte einer anderen Stelle der erfindungsgemäßen Vorrichtung zu entnehmen.

Sofern die erfindungsgemäße Vorrichtung auch für die Verarbeitung von kontaktbehafteten oder kontaktlosen Chipkarten bestimmt ist, wird gemäß einem weiteren Merkmal der Erfindung der Aufnahmetrommel ein zu einer Chipkarten-Lesestation führender Zusatzkanal zugeordnet.

Der Drehantrieb der Aufnahmetrommel wird erfindungsgemäß durch einen Schrittmotor gebildet. Die Grundposition der Aufnahmetrommel kann gemäß einem weiteren Merkmal der Erfindung durch einen Hallsensor-Positionsgeber bestimmt werden. Schließlich wird mit der Erfindung vorgeschlagen, einen zweiten Motor zum Antrieb der in der Aufnahmetrommel angeordneten Transportmittel für die jeweilige Karte vorzusehen.

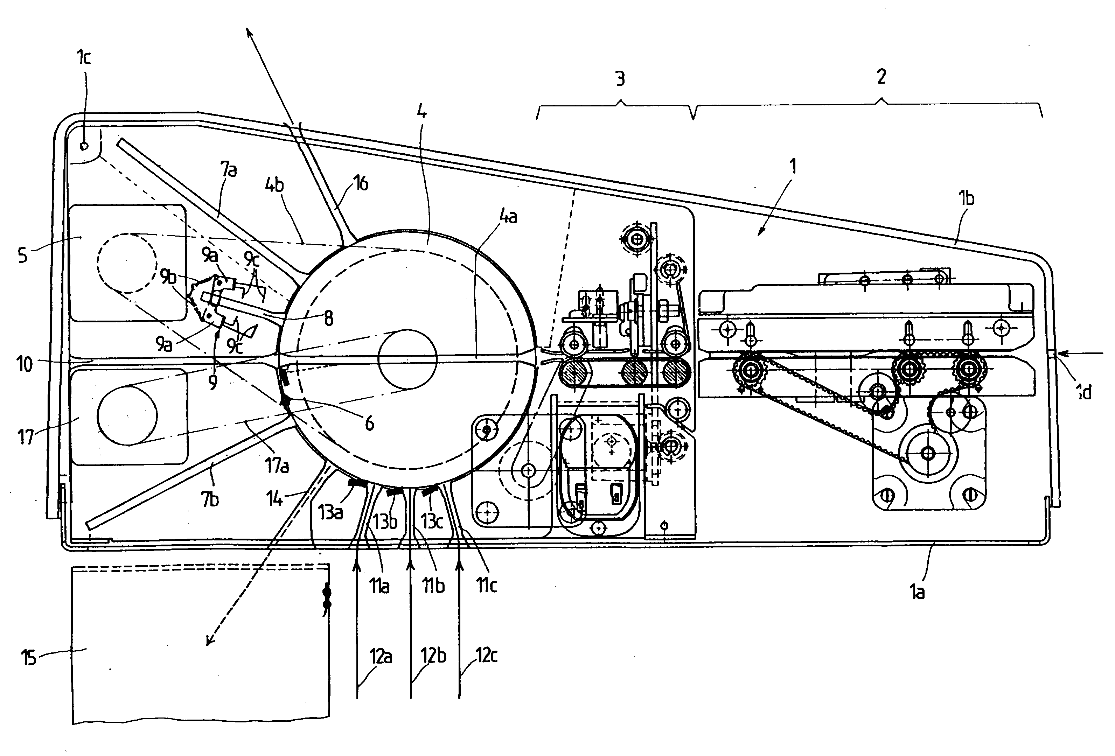

Auf der Zeichnung ist ein Ausführungsbeispiel der erfindungsgemäßen Vorrichtung in einer schematischen Seitenansicht dargestellt.

Die Zeichnung zeigt ein mit einer unteren Abdeckung 1a und einer oberen Abdeckung 1b versehenes Gehäuse 1. Es ist mit einer Eingabeöffnung 1d versehen, hinter der eine Codier- und Lese-Einheit 2 im Gehäuse 1 angeordnet ist. An diese bekannte Codier- und Lese-Einheit 2 schließt sich in Einzugrichtung ein Drucker 3 an, der beim dargestellten Ausführungsbeispiel durch einen an sich bekannten Thermodrucker gebildet ist.

Diese zum Codieren und Lesen bzw. zum Bedrucken von Magnetkarten bestimmten Geräte sind innerhalb des Gehäuses 1 in einer Linie mit einer Aufnahmetrommel 4 angeordnet, die beim Ausführungsbeispiel um 360° verdrehbar gelagert ist. Diese zylindrische Aufnahmetrommel 4 ist mit einem diametral durchgehenden Kartenschacht 4a versehen. Sie wird beispielsweise über einen Zahnriemen 4b von einem als Schrittmotor ausgebildeten Motor 5 angetrieben. Hierbei wird die Grundstellung der Aufnahmetrommel 4 im Gehäuse 1 durch einen als Hallsensor ausgebildeten Positionsgeber 6 bestimmt.

Der Aufnahmetrommel 4 sind beim dargestellten Ausführungsbeispiel zwei Parkschächte 7a, 7b zugeordnet, in denen jeweils eine maschinenlesbare Karte im Kreditkartenformat während der Verarbeitung einer weiteren Karte im selben Verarbeitungsvorgang abgelegt werden kann. Auf diese Weise ist es möglich, eine weitere maschinenlesbare Karte in den Verarbeitungsvorgang einer Magnetkarte einzubeziehen. Die Reihenfolge der Eingabe der zu einem Arbeitsgang gehörenden Karten durch die Eingabeöffnung 1d ist ebenso beliebig wie deren Ausgabe aus dem Gehäuse 1.

So ist es beispielsweise möglich, eine als Magnetkarte ausgebildete Eintrittskarte, beispielsweise für ein Schwimmbad, zur Nachbezahlung einer Gebühr in das Gehäuse 1 einzuführen. Die Magnetkarte wird hierbei in der Codier- und Leseeinheit 2 gelesen, durch den Drucker 3 hindurch in die Aufnahmetrommel 4 transportiert und durch Drehung dieser Aufnahmetrommel 4 in den Parkschacht 7a gebracht. Anschließend wird eine maschinenlesbare Geldwertkarte ins Gehäuse 1 eingeführt, gelesen und mit Hilfe der Aufnahmetrommel 4 in den Parkschacht 7b überführt. Sofern der Betrag auf der Geldwertkarte zur Bezahlung der Gebühr nicht ausreicht, kann eine weitere Geldwertkarte ins Gehäuse 1 eingeführt und gelesen werden. Sollte auch der Betrag der zweiten Geldwertkarte zur restlosen Zahlung der Gebühr nicht ausreichen, können alle drei Karten nacheinander zurückgegeben werden.

Sofern der Wert der Geldwertkarten ausreicht, die Gebühr zu zahlen, wird der jeweilige Betrag von der/den Geldwertkarte(n) abgebucht. Hierbei ist es möglich, auf einer der beiden Oberflächen der Geldwertkarte(n) einen Zeilenaufdruck mit Hilfe des Druckers 3 aufzubringen, der den jeweils letzten Restwert angibt. Auch in diesem Fall werden anschließend die drei Karten in beliebiger Reihenfolge aus dem Gehäuse 1 durch die Eingabeöffnung 1d ausgegeben.

Als Karten können hierbei unterschiedliche Karten im Kreditkartenformat verwendet werden, die aus Papier, Karton, Dick- oder Dünnplastik bestehen und als maschinenlesbare Datenträger jeweils einzeln oder kombiniert Mittel- und Seiten-Magnetstreifen aufweisen. Sofern kontaktbehaftete oder kontaktlose Chips auf den Karten Verwendung finden, ist der Aufnahmetrommel 4 ein Zusatzkanal 8 zugeordnet, der zu einer Chipkarten-Lesestation 9 führt. Beim Ausführungsbeispiel ist diese Chipkarten-Lesestation 9 für kontaktbehaftete Chipkarten ausgeführt. Sie umfaßt zwei verschwenkbar gelagerte Winkelhebel 9a, deren gegeneinander weisende Winkelarme in den Zusatzkanal 8 hineinragen. Diese Winkelhebel 9a sind durch Zugfedern 9b belastet und tragen an ihren außerhalb des Zusatzkanals 8 liegenden Winkelarmen abgewinkelte Kontaktfedern 9c. Diese Kontaktfeder 9c werden selbsttätig auf die entsprechenden Transponder der Chipkarten aufgesetzt, wenn die Karte bis zum Ende in den Zusatzkanal 8 eingeschoben wird. Hierbei verschwenkt der in Einschubrichtung vorn liegende Rand der Karte die Winkelhebel 9a entgegen der Kraft der Zugfedern 9b, so daß sich die abgewinkelten Enden der Kontaktfedern 9c auf die entsprechenden Stellen der Karte aufsetzen. Nach entsprechender Prüfung der Chipdaten wird die Karte vollständig in den Kartenschacht 4a der Aufnahmetrommel 4 zurückgezogen und entweder in einem Parkschacht 7a oder 7b geparkt oder zurückgegeben.

Auf diese Weise ist es möglich, in den Arbeitsvorgang zur Verarbeitung der in einem Parkschacht 7a oder 7b geparkten Magnetkarte auch Chipkarten einzubeziehen. Für kontaktlose Chipkarten ist anstelle der beschriebenen Chipkarten-Lesestation 9 eine entsprechende Sende-Empfangs-Einrichtung im Zusatzkanal 8 untergebracht.

Beim dargestellten Ausführungsbeispiel ist im Gehäuse 1 weiterhin ein in Zuführrichtung der Karten ausgerichteter Durchgangskanal 10 auf der dem Drucker 3 gegenüberliegenden Seite der Aufnahmetrommel 4 angeordnet. Durch diesen Durchgangskanal 10 können die Karten aus dem Gehäuse 1 heraus einer nachgeschalteten Weiterverarbeitung zugeführt werden. Außerdem besteht die Möglichkeit, durch den Durchgangskanal 10 hindurch dem Drucker 3 sowie der Codier- und Leseeinheit 2 bei der Verarbeitung zu berücksichtigendes Material zuzuführen, dessen Länge den Durchmesser der Aufnahmetrommel 4 übersteigt, wie beispielsweise Bilanz- oder Diagnoseausdrucke. Dieses Material kann darüber hinaus aus der Eingabeöffnung 1d des Gehäuses 1 ausgegeben werden.

Um mit Hilfe des Druckers 3 und/oder der Codier- und Lese-Einheit 2 maschinenlesbare Karten herstellen zu können, sind der Aufnahmetrommel 4 beim Ausführungsbeispiel 3 Zufuhrkanäle 11a, 11b, 11c zugeordnet, durch die hindurch Kartenrohmaterial 12a, 12b und 12c der Aufnahmetrommel 4 zugeführt werden kann. Bei diesem Kartenrohmaterial 12a, 12b, 12c handelt es sich beispielsweise um Kartenrollen oder vorzugsweise gefaltete Kartenstapel. Das Kartenrohmaterial 12a, 12b, 12c wird auf geeignete Weise nach Zufuhr einer vorgegebenen Länge in den Kartenschacht 4a der Aufnahmetrommel 4 durch Messer 13a, 13b, 13c abgetrennt, die an dem der Aufnahmetrommel 4 zugewandten Ende des jeweiligen Zufuhrkanals 11a bzw. 11b bzw. 11c angeordnet sind.

Durch einen schräg nach unten weisenden Karteneinzugkanal 14 können ungültige, abgenutzte, entwertete oder auf andere Weise nicht entnommene Karten eingezogen werden. Sie werden einem unterhalb des Karteneinzugkanals 14 angeordneten Auffangbehälter 15 zugeführt.

Das Ausführungsbeispiel läßt schließlich erkennen, daß der Aufnahmetrommel 4 ein weiterer, unter einem Winkel zur Zufuhrrichtung der zu verarbeiteten Karten ausgerichteter Kartenausgabekanal 16 zugeordnet ist. Über diesen Kartenausgabekanal 16 können beispielsweise Magnetkarten dem Gehäuse 1 entnommen werden, wenn der Benutzer nach der Eingabe seiner Magnetkarte beispielsweise eine Sperre durchschritten hat, die infolge der Verarbeitung der von ihm durch die Eingabeöffnung 1d eingegebenen Magnetkarte geöffnet worden ist.

Die Zeichnung zeigt schließlich einen weiteren Antriebsmotor 17, der über einen Zahnriemen 17a die in der Aufnahmetrommel 4 angeordneten Transportmittel für die jeweilige Karte antreibt. Diese Transportmittel sind der besseren Übersichtlichkeit wegen auf der Zeichnung nicht dargestellt. Mit Hilfe einer ebenfalls nicht dargestellten elektromagnetischen Kupplung, die von einem in der Aufnahmetrommel 4 angeordneten Elektromagneten gesteuert wird, können auch die in den verschiedenen Kanälen 7a, 7b, 8, 10, 14, 16 sowie 11a, 11b und 11c angeordneten Transportmittel vom Antriebsmotor 17 immer dann angetrieben werden, wenn Karten im jeweiligen Kanal transportiert werden müssen.

Zu Servicezwecken ist die Aufnahmetrommel 4 mit ihren zugehörigen Schächten 7a, 7b, 10, 11a, 11b, 11c sowie 14 und 16 um einen Drehpunkt 1c drehbar gelagert.

Die voranstehend anhand eines Ausführungsbeispiels erläuterte Vorrichtung zum Lesen und Beschreiben von Magnetkarten ist in der Lage, beispielsweise im Kreditkartenformat vorliegende maschinenlesbare Karten aus Papier, Karton sowie Dick- und Dünnplastik zu verarbeiten, die mit Mittel- und/oder Seiten-Magnetstreifen versehen sind. Es können gleichzeitig mehrere, in beliebiger Reihenfolge durch die Eingabeöffnung 1d eingeführte Karten verarbeitet werden, wobei die Aufnahmetrommel 4 in der Art einer Weiche oder Drehscheibe wirkt, um die Karten in unterschiedliche Parkpositionen zu bringen, Endlosmaterial für die Verarbeitung heranzuziehen oder Kartenrohmaterial 12a, 12b, 12c zur Herstellung von maschinenlesbaren Karten zuzuführen. Um in jeder der vier möglichen Lagen zugeführte Magnetkarten verarbeiten zu können, ist die Codier- und Leseeinheit 2 beidseitig mit Magnetköpfen für Seitenstreifenverarbeitung und einem Magnetkopf für Mittelstreifenverarbeitung ausgestattet. Sofern der Magnetstreifen einer eingeschobenen Karte unten und der entsprechende Magnetkopf oben ist, wird mit Hilfe der drehbaren Aufnahmetrommel 4 eine Wendung der Karte um die Längsachse um 180° vorgenommen. Diese Wendung erfolgt auch bei Chipkarten, wenn diese nicht mit der den Chipkontakten oder der Chipantenne zugewandten Seite eingeschoben werden. Insgesamt ergibt sich eine kompakte Vorrichtung mit mechanisch und elektrisch kostengünstigem Aufbau, die für eine Vielzahl von Anwendungsfällen eingesetzt werden kann.

### Bezugsziffernliste

- 1: Gehäuse
- 1a: Abdeckung
- 1b: Abdeckung
- 1c: Drehpunkt
- 1d: Eingabeöffnung
- 2: Codier- und Lese-Einheit
- 3: Drucker
- 4: Aufnahmetrommel
- 4a: Kartenschacht
- 4b: Zahnriemen
- 5: Motor
- 6: Positionsgeber
- 7a: Parkschacht
- 7b: Parkschacht
- 8: Zusatzkanal
- 9: Chipkarten-Lesestation
- 9a: Winkelhebel
- 9b: Zugfeder
- 9c: Kontaktfeder
- 10: Durchgangskanal
- 11a: Zufuhrkanal
- 11b: Zufuhrkanal
- 11c: Zufuhrkanal
- 12a: Kartenrohmaterial
- 12b: Kartenrohmaterial
- 12c: Kartenrohmaterial
- 13a: Messer
- 13b: Messer
- 13c: Messer
- 14: Karteneinzugkanal
- 15: Auffangbehälter
- 16: Kartenausgabekanal
- 17: Antriebsmotor
- 17a: Zahnriemen

## Patentansprüche

1. Vorrichtung zum Lesen und Beschreiben von Magnetkarten mit einer Codier- und Leseeinheit (2), einem Drucker (3), vorzugsweise Thermodrucker, und einer zylindrischen Aufnahmetrommel (4), die mit einem diametral durchgehenden Kartenschacht (4a) versehen und um eine quer zur Kartenlängsachse verlaufende Drehachse verdrehbar ist,
**dadurch gekennzeichnet,**
daß der mindestens um 180° verdrehbaren Aufnahmetrommel (4) mindestens zwei Parkschächte (7a, 7b) zugeordnet sind, von denen mindestens einer zur zeitweisen Aufnahme der zu verarbeitenden Magnetkarte und mindestens einer zur zeitweisen Aufnahme einer weiteren, für den Verarbeitungsvorgang benötigten Karte vorgesehen ist.

2. Vorrichtung nach Anspruch 1, dadurch gekennzeichnet, daß die Parkschächte (7a, 7b) unter einem Winkel zur Zuführrichtung der zu verarbeitenden Karten angeordnet und in Zuführrichtung ein Durchgangskanal (10) zur Weiterverarbeitung der Karten und/oder zur Zufuhr von in der Vorrichtung zusätzlich zu verarbeitendem Material mit einer den Durchmesser der Aufnahmetrommel (4) übersteigenden Länge, wie beispielsweise Bilanzausdrucke oder Diagnoseausdrucke, angeordnet ist.

3. Vorrichtung nach Anspruch 1 oder 2, dadurch gekennzeichnet, daß der Aufnahmetrommel (4) mindestens ein Zufuhrkanal (11a, 11b, 11c) für Kartenrohmaterial (12a, 12b, 12c) zugeordnet ist.

4. Vorrichtung nach mindestens einem der Ansprüche 1 bis 3, dadurch gekennzeichnet, daß der Aufnahmetrommel (4) ein in einem Kartenauffangbehälter (15) mündender Karteneinzugkanal (14) zugeordnet ist.

5. Vorrichtung nach mindestens einem der Ansprüche 1 bis 4, dadurch gekennzeichnet, daß der Aufnahmetrommel (4) mindestens ein unter einem Winkel zur Zufuhrrichtung der zu verarbeitenden Karten ausgerichteter zusätzlicher Kartenausgabekanal (16) zugeordnet ist.

6. Vorrichtung nach mindestens einem der Ansprüche 1 bis 5, dadurch gekennzeichnet, daß der Aufnahmetrommel (4) ein zu einer Chipkarten-Lesestation (9) führender Zusatzkanal (8) zugeordnet ist.

7. Vorrichtung nach mindestens einem der Ansprüche 1 bis 6, dadurch gekennzeichnet, daß der Drehantrieb der Aufnahmetrommel (4) durch einen Schrittmotor (5) gebildet ist.

8. Vorrichtung nach mindestens einem der Ansprüche 1 bis 7, dadurch gekennzeichnet, daß die Grundposition der Aufnahmetrommel (4) durch einen Hallsensor-Positionsgeber (6) bestimmbar ist.

9. Vorrichtung nach mindestens einem der Ansprüche 1 bis 8, dadurch gekennzeichnet, daß ein zweiter Motor (17) zum Antrieb der in der Aufnahmetrommel (4) angeordneten Transportmittel für die jeweilige Karte vorgesehen ist.

## Claims

1. Device for reading and writing on magnetic cards, having an encoding and reading unit (2), a printer (3), preferably a thermal printer, and a cylindrical holding drum (4) which is provided with a card slot (4a) passing diametrically through it and can be rotated about an axis of rotation extending transverse to the card longitudinal axis, characterized in that the holding drum (4), which can be rotated at least through 180°, is assigned at least two parking slots (7a, 7b), at least one of which is provided for the temporary holding of the magnetic card to be processed, and at least one for the temporary holding of another card which is needed for the processing operation.

2. Device according to Claim 1, characterized in that the parking slots (7a, 7b) are arranged at an angle to the feed direction of the cards to be processed, and in the feed direction there is arranged a through channel (10) for the further processing of the cards and/or for the feeding of material which is additionally to be processed in the device and has a length exceeding the diameter of the holding drum (4), such as balance print-outs or diagnostic print-outs.

3. Device according to Claim 1 or 2, characterized in that the holding drum (4) is assigned at least one feed channel (11a, 11b, 11c) for card raw material (12a, 12b, 12c).

4. Device according to at least one of Claims 1 to 3, characterized in that the holding drum (4) is assigned a card drawing-in channel (14) which opens into a card collecting container (15).

5. Device according to at least one of Claims 1 to 4, characterized in that the holding drum (4) is assigned at least one additional card delivery channel (16) which is aligned at an angle to the feed direction of the cards to be processed.

6. Device according to at least one of Claims 1 to 5, characterized in that the holding drum (4) is assigned a supplementary channel (8) leading to a chip card reading station (9).

7. Device according to at least one of Claims 1 to 6, characterized in that the rotary drive of the holding drum (4) is formed by a stepping motor (5).

8. Device according to at least one of Claims 1 to 7, characterized in that the basic position of the holding drum (4) can be determined by means of a Hall-sensor position transmitter (6).

9. Device according to at least one of Claims 1 to 8, characterized in that a second motor (17) is provided to drive the transport means, arranged in the holding drum (4), for the respective card.

## Revendications

1. Dispositif de lecture et d'écriture de cartes magnétiques comportant une unité de codage et de lecture (2), une imprimante (3), de préférence une imprimante thermique, et un tambour récepteur cylindrique (4) qui est muni d'un puits de carte (4a) le traversant diamétralement et qui peut tourner autour d'un axe de rotation s'étendant perpendiculairement au sens de la longueur des cartes,
caractérisé en ce que
au moins deux puits de rangement (7a, 7b) sont associés au tambour récepteur (4) pouvant être tourné au moins de 180°, sachant que, parmi ces puits de rangement, au moins un puits de rangement est prévu pour la réception temporaire des cartes magnétiques à traiter et au moins un autre puits de rangement est prévu pour la réception temporaire d'une autre carte nécessaire à l'opération de traitement.

2. Dispositif selon la revendication 1, caractérisé en ce que les puits de rangement (7a, 7b) sont agencés selon un certain angle par rapport à la direction d'alimentation des cartes à traiter et un canal de passage (10) est agencé dans la direction d'alimentation pour le traitement ultérieur des cartes et/ou pour l'alimentation en un matériau qui est à traiter en plus dans le dispositif et qui a une longueur dépassant le diamètre du tambour récepteur (4), par exemple des imprimés de bilan ou de diagnostic.

3. Dispositif selon la revendication 1 ou 2, caractérisé en ce qu'au moins un canal d'alimentation (11a, 11b, 11c) destiné à un matériau brut pour cartes (12a, 12b, 12c) est associé au tambour récepteur (4).

4. Dispositif selon au moins l'une des revendications 1 à 3, caractérisé en ce qu'un canal d'introduction de carte (14) débouchant dans un collecteur de cartes (15) est associé au tambour récepteur (4) .

5. Dispositif selon au moins l'une des revendications 1 à 4, caractérisé en ce qu'au moins un canal de sortie de carte (16) supplémentaire, orienté selon un certain angle par rapport à la direction d'alimentation des cartes à traiter, est associé au tambour récepteur (4).

6. Dispositif selon au moins l'une des revendications 1 à 5, caractérisé en ce qu'un canal supplémentaire (8) conduisant à un poste de lecture de cartes à puces (9) est associé au tambour récepteur (4).

7. Dispositif selon au moins l'une des revendications 1 à 6, caractérisé en ce que l'entraînement en rotation du tambour récepteur (4) est formé par un moteur pas à pas (5).

8. Dispositif selon au moins l'une des revendications 1 à 7, caractérisé en ce que la position fondamentale du tambour récepteur (4) peut être déterminée au moyen d'un transmetteur de position avec capteur à effet Hall (6).

9. Dispositif selon au moins l'une des revendications 1 à 8, caractérisé en ce qu'un second moteur (17) est prévu pour l'entraînement des moyens agencés dans le tambour récepteur (4) et destinés au transport de la carte présente.
